(19) Europäisches Patentamt
European Patent Office
Office européen des brevets

(11) **EP 4 502 365 A1**

(12) **EUROPEAN PATENT APPLICATION**
published in accordance with Art. 153(4) EPC

(43) Date of publication:
**05.02.2025 Bulletin 2025/06**

(21) Application number: **23778871.6**

(22) Date of filing: **07.02.2023**

(51) International Patent Classification (IPC):
**F03D 1/06** (2006.01)     **B29C 70/20** (2006.01)
**B29C 70/52** (2006.01)     **D01F 9/22** (2006.01)

(52) Cooperative Patent Classification (CPC):
**B29C 70/20; B29C 70/52; D01F 9/22; F03D 1/06;**
Y02E 10/72

(86) International application number:
**PCT/JP2023/003947**

(87) International publication number:
**WO 2023/188835 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.03.2022 JP 2022051299
05.12.2022 JP 2022193932**

(71) Applicant: **Toray Industries, Inc.**
**Tokyo 103-8666 (JP)**

(72) Inventors:
• **NOGUCHI, Tomohisa**
**Iyo-gun, Ehime 791-3193 (JP)**
• **OKUDA, Haruki**
**Iyo-gun, Ehime 791-3193 (JP)**
• **MIZUTA, Hisafumi**
**Iyo-gun, Ehime 791-3193 (JP)**

(74) Representative: **Mewburn Ellis LLP**
**Aurora Building**
**Counterslip**
**Bristol BS1 6BX (GB)**

(54) **UNIDIRECTIONAL COMPOSITE, SPAR CAP, AND WINDMILL BLADE**

(57)     The present invention provides a high-elastic-modulus pultruded article that is highly resistant to cracking along the fiber axis of carbon fibers. The present invention is a unidirectional composite containing carbon fibers and a matrix resin, the unidirectional composite being such that the fluctuation width of the fiber axis when a single fiber of the carbon fibers is observed from the side at a linear distance of 1 mm is 1.5 $\mu$m or greater.

Figure 1

EP 4 502 365 A1

## Description

TECHNICAL FIELD

The present invention relates to a unidirectional composite containing carbon fibers arranged in one direction, which has high resistance to cracks along the fiber axis of the carbon fibers and high modulus of elasticity.

BACKGROUND ART

In recent years, the range of use of carbon fibers, which are low in specific gravity and superior in mechanical properties, has been increasingly expanded, and accordingly, the required level has been diversified and enhanced. The form of carbon fibers for the utilization thereof varies depending on the application, and carbon fibers are utilized in various forms varying from continuous fibers to discontinuous fibers. A unidirectional composite, in particular, a pultruded article, which is one of the typical application forms of carbon fiber, includes carbon fibers arranged in one direction and impregnated with a resin, and has been cured. Therefore, the pultruded article exhibits superior mechanical properties in the orientation direction of the carbon fibers. It has been considered with a pultruded article preferable that reinforcing fibers are arranged with highly uniaxial orientation and it is important to improve the homogeneity of an impregnation resin by increasing the straightness of reinforcing fibers. For example, Patent Document 1 proposes a method of increasing the straightness of reinforcing fibers by performing pultrusion by applying tension while repeating opening and closing of the reinforcing fibers.

In wind power generation, windmill blades have been increased in size in order to improve power generation efficiency and increase the amount of power generation. A carbon fiber pultruded article has a high modulus of elasticity and can afford a material identical in shape in the longitudinal direction, and thus has been used as a spar cap of a windmill blade having an increased size. On the other hand, when a windmill blade has been increased in size, it is difficult to transport the windmill blade. To solve this problem, a windmill blade that can be divided, transported, and assembled has been proposed. For example, Patent Document 2 proposes a structure in which an inner portion and an outer portion of a windmill blade can be bolted in a connecting region provided in a thick portion.

In addition, in a case where a windmill blade is increased in size, a wide pultruded article is required for a spar cap portion, but it becomes more difficult to make a pultruded article well be in conformity to the curvature of a blade mold as the width increases. To solve this problem, a technique has been proposed in which deformation of a pultruded article is facilitated only in a certain direction by devising the shape of the pultruded article. For example, Patent Document 3 proposes a method in which a pultruded article having grooves in the spanwise direction is used to impart lateral flexibility to the pultruded article, thereby making it possible to make the pultruded article be in conformity to the curvature of a windmill blade mold.

In increasing the size of a windmill blade, the modulus of elasticity of the pultruded article to be used is preferably as high as possible, but a carbon fiber having a higher modulus of elasticity has a lower compressive strength and a higher risk of breakage due to compressive failure. To solve this problem, a method in which carbon fibers having both a high modulus of elasticity and a high compressive strength are used for a pultruded article is considered. For example, Patent Document 4 proposes a method for obtaining a carbon fiber having both a high modulus of elasticity and a high compressive strength by controlling a crystal state of the carbon fiber by such a technique as applying twists during a carbonization process.

PRIOR ART DOCUMENT

PATENT DOCUMENTS

Patent Document 1: Japanese Patent Laid-open Publication No. 2018-001682
Patent Document 2: International Publication No. 2013/083451
Patent Document 3: US Patent No. 2019/0270261
Patent Document 4: International Publication No. 2019/203088

SUMMARY OF THE INVENTION

PROBLEMS TO BE SOLVED BY THE INVENTION

These conventional techniques, however, have problems as described below.

Patent Document 2 proposes a structure in which an inner portion and an outer portion of a windmill blade can be bolted in a connecting region provided in a thick portion, but during the time of forming a similar bolt hole on a spar cap formed using a pultruded article of carbon fibers, cracks may occur along the fiber axis direction of carbon fibers. On the other hand, Patent Document 3 proposes a method in which a pultruded article having grooves in a spanwise direction is used to impart lateral flexibility to the pultruded article, thereby making it possible to match the pultruded article to the curvature of the windmill blade mold. However, when the curvature of the windmill blade mold is large, cracks may occur along the fiber axis direction of carbon fibers. Studies conducted by the present inventors have shown that these problems are caused by low resistance to cracks along the fiber axis of carbon fibers because carbon fibers are arranged with highly uniaxial orientation in conventional pultruded articles.

Patent Document 4 proposes a method of obtaining a carbon fiber having both a high modulus of elasticity and a high compressive strength through controlling the crystal state of the carbon fiber by a technique such as applying twists during a carbonization process. However, it has been clear with a carbon fiber obtained by applying twists in the carbonization process that waviness remains in the fiber due to the influence of twists, and straightness of reinforcing fibers may be lowered.

Accordingly, a problem to be solved by the present invention is to provide a unidirectional composite having high resistance to cracks along the fiber axis of carbon fibers and a high modulus of elasticity, which is likely to avoid damage in post-processing necessary for coping with increase in size of windmill blades.

SOLUTIONS TO THE PROBLEMS

To achieve the above object, the present invention includes the following aspects.

[1] A unidirectional composite including carbon fibers and a matrix resin, in which a single fiber of the carbon fibers has an undulation width of a fiber axis of 1.5 $\mu$m or more when the single fiber is observed from a side face in a range having a straight distance of 1 mm.
[2] The unidirectional composite according to [1], in which an average of the helical pitch of a fiber axis of the carbon fibers is 5.50 cm or less.
[3] The unidirectional composite according to [1] or [2], a formula (1) is satisfied where the average of the single fiber to single fiber distance of the carbon fibers contained in the unidirectional composite is denoted by R (um), and the undulation width of the fiber axis of the carbon fibers is denoted by D (um)

$$2.0 \leq D \div R \leq 35.0 \cdots \text{Formula (1)}.$$

[4] The unidirectional composite according to any one of [1] to [3], in which the volume content of the carbon fibers is 60% by volume or more.
[5] The unidirectional composite according to any one of [1] to [4], in which a carbon fiber bundle is contained in the matrix resin in a state where the carbon fiber bundle has a twist of 10 turns/m or less.
[6] The unidirectional composite according to any one of [1] to [5], in which in a section perpendicular to the fiber direction of the unidirectional composite, where a sectional area of a carbon fiber bundle contained in the unidirectional composite is denoted by X ($mm^2$), there is substantially no resin-rich portion having an area of 3% or more of X.
[7] The unidirectional composite according to any one of [1] to [6], containing, as the carbon fibers, both carbon fibers being single fibers whose fiber axis has a right-handed helix and carbon fibers being single fibers whose a fiber axis has a left-handed helix.
[8] The unidirectional composite according to [7], in which where the number of carbon fiber bundles composed of carbon fibers being single fibers whose fiber axis has a right-handed helix is denoted by $N_A$ (bundles), and the number of carbon fiber bundles composed of carbon fibers being single fibers whose a fiber axis has a left-handed helix is denoted by $N_B$ (bundles), a ratio $N_A/(N_A + N_B)$ is 0.4 to 0.6.
[9] The unidirectional composite according to [7] or [8], in which carbon fiber bundles composed of carbon fibers being single fibers whose fiber axis has a right-handed helix and carbon fiber bundles composed of carbon fibers being single fibers whose a fiber axis has a left-handed helix are alternately arranged in a width direction of the unidirectional composite.
[10] The unidirectional composite according to any one of [1] to [9], having a tensile modulus of elasticity of 150 GPa or more.
[11] The unidirectional composite according to any one of [1] to [10], being a pultruded article.
[12] The unidirectional composite according to any one of [1] to [11], in which an average of a single-fiber diameter of the carbon fibers is 6.0 $\mu$m or less, and the unidirectional composite is a unidirectional prepreg molded article.
[13] A spar cap including the unidirectional composite according to any one of [1] to [12].
[14] A windmill blade including the spar cap according to [13] .

EFFECTS OF THE INVENTION

The unidirectional composite of the present invention is a unidirectional composite having high resistance to cracks along the fiber axis of carbon fibers and a high modulus of elasticity due to untwisting a twisted yarn having a large number of twists and using the untwisted yarn for the production of the unidirectional composite, and thereby effectively controlling the undulation width of the fiber axis of single fibers of the carbon fibers.

BRIEF DESCRIPTION OF THE DRAWINGS

Fig. 1 is a schematic diagram illustrating a method for evaluating the undulation width of a fiber axis.
Fig. 2 is a schematic diagram illustrating a method for evaluating a helical pitch of a single fiber.
Fig. 3 is a schematic diagram illustrating a method for determining an average of the single fiber to single fiber distance of the carbon fibers contained in a unidirectional composite.
Fig. 4 is a schematic diagram illustrating a method of determining an area of a resin-rich portion in a case where there are no carbon fibers inside.
Fig. 5 is a schematic diagram illustrating a method of determining an area of a resin-rich portion in a case where there are carbon fibers inside.
Fig. 6 is a schematic diagram illustrating a method for evaluating crack resistance along the fiber axis of carbon fibers.
Fig. 7 is a schematic diagram illustrating helical directions of carbon fibers during pultrusion.

EMBODIMENTS OF THE INVENTION

In the present invention, the term "carbon fiber" is used in a broad sense including a carbon fiber bundle and a carbon fiber single fiber. The carbon fiber bundle refers to a bundle in which multiple carbon fiber single fibers (for clarity, a carbon fiber single fiber may be referred to simply as a "single fiber") are assembled.

The unidirectional composite of the present invention is a unidirectional composite including carbon fibers and a matrix resin, in which a single fiber of the carbon fibers has an undulation width of a fiber axis of 1.5 $\mu$m or more when the single fiber is observed from a side face in a range having a straight distance of 1 mm. Whether or not the undulation width is 1.5 $\mu$m or more can be easily confirmed by first, if in the stage of producing a unidirectional composite using a carbon fiber bundle, taking out a single fiber from the carbon fiber bundle to be fed, and observing the single fiber by the method described later.

The measurement of the undulation width of the present invention is performed by observing a carbon fiber single fiber from a direction perpendicular to the fiber axis direction in an environment in which no stress other than gravity is applied. For a fiber having a three-dimensional fluctuation, the fiber axis direction and a direction perpendicular thereto are defined as follows. When a carbon fiber single fiber is put at rest on a horizontal plane, a straight line connecting two points separated by 1,000 $\mu$m on the projection image to the horizontal plane is defined as a virtual fiber axis of the section to be observed, and the vertical direction is defined as the direction perpendicular to the fiber axis direction. Thus, the undulation width is an approximate value that is determined in the projected image.

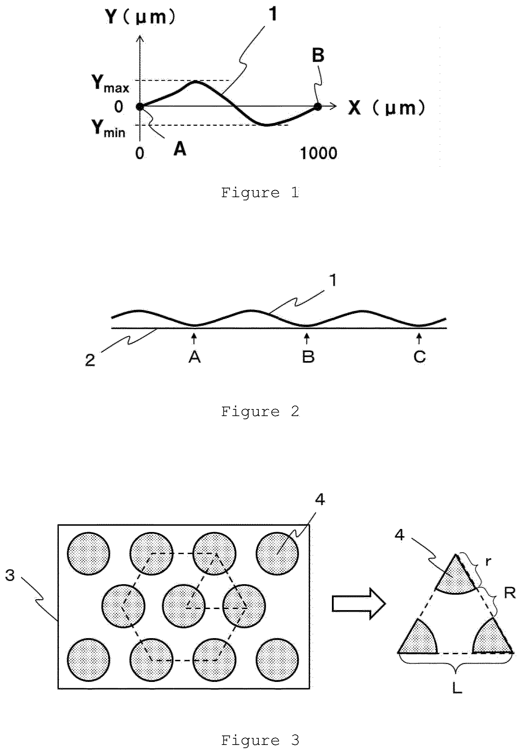

As illustrated in Fig. 1, where a through-thickness center of the carbon fiber single fiber 1 observed is appropriately selected and defined as contact point A, another through-thickness center of the carbon fiber single fiber 1 separated by a straight distance of 1 mm (1,000 pm) away from the contact point A is defined as contact point B, the point A is assumed to be the origin of the XY coordinate plane that is located at the position where X = 0 $\mu$m and Y = 0 $\mu$m, and the contact point B is assumed to be on the X axis at the position where X = 1,000 $\mu$m and Y = 0 pm, a difference $\Delta$Y (pm) between the highest through-thickness center of the single fiber in the Y-axis direction located at Ymax (pm) and the lowest one located at Ymin (pm), which is calculated by subtracting the latter from the former, is defined as the undulation width. Fifty independent single fibers are randomly selected and subjected to undulation width measurement, and their average is adopted.

The undulation width can be interpreted as a parameter indicating the strength of twisting of the carbon fibers used in the unidirectional composite, and the larger the undulation width, the stronger the twisting is indicated to be. As described in the section of background art, it is generally considered that it is preferable that reinforcing fibers are highly uniaxially oriented in a unidirectional composite, especially in a pultruded article. However, when the present inventors purposely studied the use for a unidirectional composite of carbon fibers that intentionally disturb uniaxial orientation microscopically and have an enlarged undulation width, it has been found that the use exhibits an unexpected effect that resistance to cracks along a fiber axis can be increased.

By setting the undulation width to 1.5 $\mu$m or more, the frequency at which adjacent carbon fiber single fibers are entangled with each other can be increased, and the resistance to cracks along the fiber axis of the carbon fibers can be increased. Further, the undulation width is preferably 3.0 μm or more, more preferably 4.0 μm or more, and still more preferably 4.5 μm or more. The upper limit of the undulation width is not particularly limited from the viewpoint of increasing the resistance to cracks along the fiber axis of the carbon fibers, but the upper limit of the undulation width is preferably less than 30 μm from the viewpoint of productivity because it is necessary to apply strong twist to obtain a carbon fiber having a large undulation width, and it may be necessary to reduce the manufacturing speed.

On the other hand, when a unidirectional composite has already been formed, whether or not the undulation width is 1.5 μm or more can be determined using a single fiber obtained after the unidirectional composite is cut by the method described later and the matrix resin is removed.

In the unidirectional composite of the present invention, an average of a helical pitch of a fiber axis of the carbon fibers is preferably 5.50 cm or less. In the present invention, a helical pitch of a fiber axis of a single fiber is a morphological feature of the fiber axis that correlates with the strength of twisting of a twisted yarn. That is, the twisted yarn is obtained by applying twists during the production of a carbon fiber bundle, and the carbon fiber bundle thus obtained may maintain the form of twist.

Here, the state in which the form of twist is maintained refers to a state in which twist does not come off from the carbon fiber bundle even when the carbon fiber bundle is cut to form a free end. On the other hand, when twist is forcibly applied to a carbon fiber bundle obtained without applying twist even once during the manufacturing process, and an arbitrary portion is cut to form a free end, since the fiber axis of a single fiber constituting the carbon fiber bundle is originally straight, the twist is naturally eliminated in order from the free end by high rigidity of the carbon fiber. The carbon fiber bundle in which the form of twist is maintained is easily obtained particularly via a state in which twist is applied in the carbonization process.

When a single fiber is taken out from the carbon fiber bundle in which such a form of twist is maintained, and then observed, the fiber axis of the single fiber draws a "helix". In the present invention, the helical pitch refers to a distance in the fiber axis direction through which the helix advances during one turn. The average of the helical pitch refers to an average of the helical pitches obtained by extracting and evaluating multiple carbon fiber single fibers contained in the unidirectional composite, and a detailed evaluation method will be described later.

The fact that the average of the helical pitch is 5.50 cm or less indicates that the carbon fiber bundle has been treated in a state where twist with sufficient strength is applied during the production of the carbon fiber bundle, and makes it easy to obtain a carbon fiber having a large undulation width, so that the frequency at which adjacent carbon fiber single fibers are entangled with each other can be increased, and the resistance to cracks along the fiber axis of the carbon fibers can be increased. The average of the helical pitch is more preferably 4.50 cm or less, and particularly preferably 3.50 cm or less. The upper limit of the helical pitch is not particularly limited from the viewpoint of increasing the resistance to cracks along the fiber axis of the carbon fibers, but the upper limit of the helical pitch is more preferably 1.00 cm or more from the viewpoint of productivity because it is necessary to apply strong twist to obtain a carbon fiber having a large helical pitch, and it may be necessary to reduce the manufacturing speed.

In the helical direction of the fiber axis of the single fiber includes two types, namely, right-handed winding and left-handed winding depending on the direction of twist applied to the carbon fiber bundle being treated in the manufacturing process. "Z-twisted" and "S-twisted", which are general technical terms expressing the twisting direction, respectively correspond to the right-handed winding and the left-handed winding as the helical direction of a single fiber. That is, a Z-twisted yarn is made of a single fiber in which the helical direction of the fiber axis is a right-handed winding direction, and a S-twisted yarn is made of a single fiber in which the helical direction of the fiber axis is a left-handed winding direction.

According to the studies conducted by the present inventors, when twist is excessively applied for the purpose of increasing undulation width to enhance the crack resistance along the fiber axis of carbon fibers, warpage may occur in the unidirectional composite. As a configuration for inhibiting warpage of the unidirectional composite while enhancing crack resistance, the unidirectional composite preferably includes, as carbon fibers, both carbon fibers being single fibers whose fiber axis has a right-handed helix and carbon fibers being single fibers whose fiber axis has a left-handed helix. According to the studies conducted by the present inventors, use in combination of carbon fibers composed of single fibers having a fiber axis having a right-handed helix (hereinafter, sometimes referred to briefly as right-handed carbon fibers) and carbon fibers composed of single fibers having a fiber axis having a left-handed helix (hereinafter, sometimes referred to briefly as left-handed carbon fibers) makes it possible to increase the frequency at which adjacent carbon fiber single fibers are entangled with each other, and also possible to inhibit warpage of the unidirectional composite while enhancing crack resistance along the fiber axis of the carbon fibers.

Whether or not both the right-handed carbon fibers and the left-handed carbon fibers are contained can be easily confirmed by observing the carbon fiber bundle to be fed in the stage of producing the unidirectional composite directly from the carbon fiber bundle or in the stage of producing an intermediate base for obtaining the unidirectional composite.

Specifically, first, when the carbon fiber bundle to be fed is cut to form a free end, twisting is recovered in the direction of twist originally held by the carbon fiber bundle starting from the free end. When the direction of the recovered twist is the Z-twisting direction, the helical axis of the fiber axis is right-handed, whereas when the direction of the recovered twist is the S-twisting direction, the helical direction of the fiber axis is left-handed. Therefore, when among the carbon fiber bundles to be fed, an arbitrary number of bundles ranging from several bundles to all the bundles are checked, and as a result, a carbon fiber bundle in which the helical direction of the fiber axis is right-handed and a carbon fiber bundle in which the helical direction of the fiber axis is left-handed are observed, the unidirectional composite can be determined as being one containing right-handed carbon fibers and left-handed carbon fibers.

On the other hand, when a unidirectional composite has already been formed, whether right-handed carbon fibers and left-handed carbon fibers are contained can be determined by using single fibers obtained after the unidirectional composite is cut and the matrix resin is removed by the method described later.

The unidirectional composite of the present invention preferably contains both a carbon fiber bundle composed of right-handed carbon fibers and a carbon fiber bundle composed of left-handed carbon fibers. In this case, where the number of carbon fiber bundles composed of right-handed carbon fibers is denoted by $N_A$ (bundles) and the number of carbon fiber bundles composed of left-handed carbon fibers is denoted by $N_B$ (bundles), the ratio $N_A/(N_A + N_B)$ is preferably 0.4 to 0.6. By setting the ratio $N_A/(N_A + N_B)$ to be in the range of 0.4 to 0.6, right-handed carbon fibers and left-handed carbon fibers are easily brought into contact with each other in the unidirectional composite, and the frequency at which single fibers are entangled with each other can be increased, so that crack resistance is easily enhanced, and warpage of the unidirectional composite is easily inhibited.

In the present invention, for convenience, such this ratio is also denoted as ratio $f_A$. The ratio $f_A$ is calculated on the basis of the number of carbon fiber bundles. For example, when the ratio $f_A$ is 0.4, the composite is formed at a ratio of six left-handed carbon fiber bundles to four right-handed carbon fiber bundles.

It is preferable with the unidirectional composite of the present invention that when the unidirectional composite is equally divided into two pieces in the width direction, the ratio $N_A/(N_A + N_B)$ is 0.4 to 0.6 in both of the two pieces after the division. When the ratio $N_A/(N_A + N_B)$ is set to be in the range of 0.4 to 0.6 for both of the two pieces after the division, right-handed carbon fibers and left-handed carbon fibers easily come into contact with each other in the unidirectional composite, and the frequency at which single fibers are entangled with each other can be increased, so that crack resistance is easily improved, and warpage of the unidirectional composite is easily inhibited. In addition, it is further preferable that mixing is performed such that when the unidirectional composite is evenly divided into four pieces in the width direction, the ratio $N_A/(N_A + N_B)$ is 0.4 to 0.6 in all of the four pieces after the division. When the ratio $N_A/(N_A + N_B)$ is set to be in the range of 0.4 to 0.6 for all of the four pieces after the division, the crack resistance is more easily enhanced, and the warpage of the unidirectional composite is also easily inhibited.

In addition, when the width of the unidirectional composite is 50 mm or more, it is preferable that when the unidirectional composite is equally divided into $2^n$ pieces (n is a natural number) in the width direction until the width of each unidirectional composite after the division is 10 mm or more and 20 mm or less, the ratio $N_A/(N_A + N_B)$ is 0.4 to 0.6 for all of the $2^n$ pieces after the division. When the ratio $N_A/(N_A + N_B)$ is set to be in the range of 0.4 to 0.6 for all of the $2^n$ pieces after the division, the crack resistance is more easily enhanced, and the warpage of the unidirectional composite is also easily inhibited.

The unidirectional composite of the present invention preferably has an elongated plate shape, and the long side direction in a section perpendicular to the fiber direction is defined as the width direction, and the short side direction is defined as the thickness direction. It is noted that when this section has a square shape, that is, in the case of a unidirectional composite having a regular quadrangular prism shape, the direction of an arbitrary side is defined as the width direction.

When the unidirectional composite of the present invention includes both carbon fiber bundles composed of right-handed carbon fibers and carbon fiber bundles composed of left-handed carbon fibers, the right-handed carbon fiber bundles and the left-handed carbon fiber bundles are preferably alternately arranged in the width direction of the unidirectional composite. When the right-handed carbon fiber bundles and the left-handed carbon fiber bundles are alternately arranged in the width direction, right-handed carbon fibers and left-handed carbon fibers easily come into contact with each other in the unidirectional composite, and the frequency at which single fibers are entangled with each other can be increased. Therefore, the crack resistance is easily enhanced, and the warpage of the unidirectional composite is easily inhibited.

The unidirectional composite of the present invention preferably has a volume content of the carbon fibers of 60% by volume or more. As the volume content of the carbon fibers increases, the frequency at which adjacent carbon fiber single fibers are entangled with each other can be increased, and the resistance to cracks along the fiber axis of the carbon fibers can be increased. The volume content of the carbon fibers is more preferably 65% by volume or more. When the volume content of the carbon fibers is increased, fuzz may be generated due to an increase in pultruding force during pultrusion, and it may be difficult to implement the process. Therefore, the volume content of the carbon fibers is more preferably 80% by volume or less.

It is preferable with the unidirectional composite of the present invention that where the average of the single fiber to single fiber distance of the carbon fibers contained in the unidirectional composite is denoted by R (um) and the undulation width of the fiber axis of the carbon fibers is denoted by D (um), formula (1) is satisfied.

$$2.0 \leq D \div R \leq 35.0 \cdots \text{Formula (1)}$$

According to the studies conducted by the present inventors, it is possible to enhance the resistance to cracks along the fiber axis of the carbon fibers without significantly impairing the productivity by controlling the carbon fiber to satisfy the formula (1). In the formula (1), $D \div R$ is an index indicating the ease of entanglement of adjacent carbon fiber single fibers, and the larger the value thereof, the more the crack resistance can be enhanced. $D \div R$ is more preferably 3.5 or more. In addition, from the viewpoint of increasing the resistance to cracks along the fiber axis of the carbon fibers, the upper limit of $D \div R$ is not particularly limited, but to increase $D \div R$, either or both of increasing the undulation width D and decreasing the average R of the single fiber to single fiber distance are required. To increase the undulation width D, it is necessary to strongly apply twist, whereas to decrease the average R of the single fiber to single fiber distance, it is necessary to increase the volume content of the carbon fibers. When $D \div R$ is excessively increased, productivity may be greatly reduced, and therefore $D \div R$ is preferably 35.0 or less. $D \div R$ is more preferably 15.0 or less, and particularly preferably 10.0 or less.

In the unidirectional composite of the present invention, carbon fiber bundles are preferably contained in the matrix resin in a state where the carbon fiber bundle has a twist of 10 turns/m or less. When the number of twists of the carbon fiber bundles is 10 turns/m or less, single fibers contained in adjacent the carbon fiber bundles are easily entangled with each other, so that the crack resistance can be enhanced. The number of twists is more preferably 5 turns/m or less.

It is preferable with the unidirectional composite of the present invention that in a section perpendicular to a fiber direction of the unidirectional composite, where a sectional area of a carbon fiber bundle contained in the unidirectional composite is denoted by X ($mm^2$), there is substantially no resin-rich portion having an area of 3% or more of X. The resin-rich portion refers to a portion that contains no carbon fibers and is composed only of a resin. In the present invention, the state that there is substantially no resin-rich portion having an area of 3% or more of the sectional area X of a carbon fiber bundle means that a step of cutting the unidirectional composite perpendicularly to the fiber direction and observing the section is repeated three times for arbitrary sections, and in all the observations, there is no resin-rich portion having an area of 3% or more of the sectional area X of a carbon fiber bundle. When there is substantially no resin-rich portion having an area of 3% or more of the sectional area X of a carbon fiber bundle, single fibers contained in adjacent carbon fiber bundles are easily entangled with each other, so that the crack resistance can be enhanced.

In the present invention, the tensile modulus of elasticity of the unidirectional composite is preferably 150 GPa or more. By setting the tensile modulus of elasticity of the unidirectional composite to 150 GPa or more, the rigidity required as a unidirectional composite for large windmill blades can be satisfied. The tensile modulus of elasticity of the unidirectional composite is more preferably 200 GPa or more, and particularly preferably 240 GPa or more. There is no particular upper limit on the tensile modulus of elasticity of the unidirectional composite from the viewpoint of improving rigidity, but the tensile modulus of elasticity of the unidirectional composite is more preferably less than 500 GPa, and particularly preferably less than 400 GPa because when the tensile modulus of elasticity of carbon fibers is increased for the purpose of improving the tensile modulus of elasticity of the unidirectional composite, the tensile strength may decrease or fuzz may be generated.

Examples of the unidirectional composite of the present invention include a pultruded article, a unidirectional prepreg molded article, and a filament wound article, and the unidirectional composite is preferably a pultruded article or a unidirectional prepreg molded article in which an average of the single-fiber diameter of the carbon fibers is 6.0 $\mu$m or less. The unidirectional composite of the present invention is preferably a pultruded article, which is capable of being efficiently produced in the same shape in its longitudinal direction from the viewpoint of efficiency in producing a large member. Further, the unidirectional composite of the present invention is preferably a unidirectional prepreg molded article from the viewpoint of suitability in manufacturing a member having a complicated shape, and in order to satisfy dimensional stability often required in a complicated shape, preferably the unidirectional composite has an average of the single-fiber diameter of the carbon fibers of 6.0 $\mu$m or less.

When a member is produced using the unidirectional composite of the present invention, unidirectional composites may be bonded together to be integrated, or a nonwoven fabric or a woven fabric may be sandwiched between one unidirectional composite and another unidirectional composite, and then impregnated together with a resin and cured to be integrated. Furthermore, a different isotropic composite or the like may be bonded to the unidirectional composite of the present invention.

As the matrix resin to be used for the unidirectional composite of the present invention, both a thermosetting resin and a thermoplastic resin can be used. As the thermosetting resin, a vinyl ester resin, an epoxy resin, an unsaturated polyester resin, an acrylic resin, or the like can be used. As the thermoplastic resin, a polyamide resin, a polyester-based resin, a polycarbonate resin, a polyphenylene sulfide resin, a polyether sulfone resin, a polyether ether ketone resin, or the like can be used.

The spar cap of the present invention is preferably a spar cap including the unidirectional composite of the present invention. Owing to containing the unidirectional composite of the present invention, a spar cap having high resistance to cracks along the fiber axis of carbon fibers and a high modulus of elasticity can be afforded. The spar cap is a reinforcement to constitute a spar to be used for a windmill blade, a main wing of an airplane, a mast of a ship, or the like, and is often used for the purpose of enhancing strength and modulus of elasticity as a structure. Therefore, a spar cap having high strength or high modulus of elasticity is preferably used because the reinforcing effect is increased. In addition, a spar cap having high resistance to cracks is preferably used because the reinforcing effect may be weakened due to generation of cracks in a spar cap. The spar cap of the present invention may include only the unidirectional composite of the present invention, or may include the unidirectional composite of the present invention and another unidirectional composite or an isotropic composite. The spar cap of the present invention may comprise an item prepared by bonding and integrating unidirectional composites together, or may comprise an item prepared by sandwiching a nonwoven fabric or a woven fabric between one unidirectional composite and another unidirectional composite, and then impregnating them together with a resin and cured to be integrated.

The windmill blade of the present invention is preferably a windmill blade including the spar cap of the present invention. As a windmill blade is increased in size, the amount of power generation by wind power generation increases. Therefore, a windmill blade having an increased size is preferably used, but damage may occur in post-processing required to cope with the increase in size. On the other hand, the inclusion of the spar cap of the present invention can afford a windmill blade that can easily avoid damage in post-processing necessary for coping with the increase in size. The windmill blade of the present invention may include only the spar cap of the present invention, or may include the spar cap of the present invention and another spar cap. For example, the spar cap of the present invention may be used only in a portion which is easily cracked or deformed.

The twisted yarn to be used for the unidirectional composite of the present invention can be obtained, for example, by the method described in Japanese Patent Laid-open Publication No. 2014-141761 or the method described in International Publication No. 19/203088. The degree of crystal orientation may be effectively increased by passing a yarn through a carbonization process while applying a high tension in a twisted state, or a high-quality carbon fiber bundle with few damage on single fibers may be formed under application of twist with minimized tension. What is important is that owing to adopting the configuration of the unidirectional composite of the present invention, a unidirectional composite having high resistance to cracks along the fiber axis of carbon fibers and a high modulus of elasticity can be effectively obtained.

EXAMPLES

The present invention will hereinafter be described in detail with reference to Examples, but the invention is not limited thereto.

The methods of measuring various physical property values described in the present description are as follows.

<Tensile modulus of elasticity of carbon fiber>

The tensile modulus of elasticity of a carbon fiber is determined by the following procedure in accordance with the resin-impregnated strand test method of JIS R 7608:2004. It is noted that in the case where the carbon fiber has a twist, evaluations are made after unraveling the twist by twisting it in the reverse rotation direction by the same number of turns as its original twist count. As a resin formulation, "CELLOXIDE (registered trademark)" 2021P (manufactured by Daicel Corporation)/boron trifluoride monoethylamine (manufactured by Tokyo Chemical Industry Co., Ltd.)/acetone = 100/3/4 (parts by mass) is used, and as curing conditions, normal pressure, a temperature of 125°C, and a time of 30 minutes are used. Ten strands of the carbon fiber are measured, and the average of the measurements is taken as the tensile modulus of elasticity. The strain range in calculating the tensile modulus of elasticity is set to 0.1 to 0.6%.

<Number of twists of carbon fiber bundle>

The number of twists (turn/m) of a carbon fiber bundle is determined by drawing out a carbon fiber bundle to be measured by 1 m, twisting one end of the fiber bundle with the longitudinal direction of the fiber bundle taken as a rotation axis, and dividing the number of twists counted until the original twists have completely been removed by 1. The number of twists is counted with 360 degrees taken as one twist. The determination as to whether the original twists have completely been removed is performed by visual observation and, as necessary in the case of being difficult to follow with eyes, fine adjustment through discrimination of residue of slight twist found by inserting a thin and rigid needle such as a culture needle with a handle into the carbon fiber bundle and following in the longitudinal direction of the carbon fiber bundle. The measurement is performed three times, and the average of the measurements is taken as the number of twists of the carbon fiber bundle.

<Number of twists of carbon fiber bundles contained in unidirectional composite>

First, a rectangular parallelepiped having a length of 25 cm in the fiber orientation direction is cut from an arbitrary position of a unidirectional composite. The unidirectional composite cut in the rectangular parallelepiped is placed in an electric furnace filled with a nitrogen atmosphere and set at a temperature of 450°C, the matrix resin is thereby burned off, and then a remaining carbon fiber bundle is taken out. Then, the number of twists is determined by twisting one end of the fiber bundle with the longitudinal direction of the fiber bundle taken as a rotation axis, and dividing the number of twists counted until the original twists have completely been removed by 0.25. The number of twists is counted with 360 degrees taken as one twist. The determination as to whether the original twists have completely been removed is performed by visual observation and, as necessary in the case of being difficult to follow with eyes, fine adjustment through discrimination of residue of slight twist found by inserting a thin and rigid needle such as a culture needle with a handle into the carbon fiber bundle and following in the longitudinal direction of the carbon fiber bundle. The measurement is performed three times, and the average of the measurements is taken as the number of twists of the carbon fiber bundle.

<Undulation width of fiber axis of carbon fiber>

From the carbon fiber bundle used for the unidirectional composite, 50 single fibers are randomly collected. When it is difficult to obtain carbon fiber bundles that is after having already been pultruded but before being subjected to the production of a unidirectional composite, a rectangle 1 cm long in the fiber orientation direction is cut from an arbitrary position of a unidirectional composite. When the width in the direction orthogonal to the fiber direction is 5 cm or more, the unidirectional composite is cut into a rectangle having a length of 1 cm and a width of 5 cm. The unidirectional composite cut in the rectangle is placed in an electric furnace filled with a nitrogen atmosphere and set at a temperature of 450°C, and the matrix resin is thereby burned off. Then, an aggregate of the remaining carbon fiber bundles is placed in a 50 mL glass container with a lid, and shaken up and down 50 times to allow single fibers to be well mixed with each other, and then 50 carbon fiber single fibers are randomly collected from the mixture.

Next, a carbon fiber single fiber to be examined is cut to 1 to 5 mm in length and placed on a copy paper. If the single fiber adheres to the copy paper due to the influence of static electricity, the following operations are conducted after the static charge is removed by a common technique. It is observed under an optical microscope from the vertical direction to the page, and an image is taken. For the optical microscope, an objective lens with a magnification of 10 times is used. The image is stored in jpg format, horizontal 2,592 pixels x vertical 1,944 pixels.

The image obtained is imported on "ImageJ", open-source image processing software, followed by denoting an arbitrary point on the fiber axis as point A and a point 1,000 $\mu$m away from point A on the fiber axis as point B. Then, "Bilinear Interpolation" is selected as interpolation algorithm for image rotation, and the image is rotated such that point A and point B are on a horizontal line. The image data are binarized and then skeletonized to extract the fiber axis as a 1-pixel-wide curve. At this time, the fiber axis may be branched due to dust or the like adhered to the fiber surface, but such branches other than the fiber axis are ignored.

Finally, the difference $\Delta Y$ (pm) obtained by subtracting the minimum value Ymin from the maximum value Ymax among the Y coordinates of the points through which the fiber axis passes between the points A and B is read, and it is taken as the undulation width of the single fiber evaluated. The undulation width evaluated for 50 independent single fibers is averaged and employed as the undulation width in the present invention.

In the examples described below, an upright microscope "DM2700M" manufactured by Leica Microsystems GmbH was used as an optical microscope.

<Helical pitch of fiber axis of single fiber>

A carbon fiber single fiber to be measured is cut into a length of 10 $\pm$ 0.5 cm, and is left on a copy paper laid on a horizontal table. If the single fiber adheres to the copy paper due to the influence of static electricity, the following operations are conducted after the static charge is removed by a common technique. When the copy paper on which the single fiber is placed is turned upside down, if the single fiber adheres to and does not separate from the copy paper, static elimination is insufficient, and thus static elimination is additionally performed. The single fiber is visually observed from the normal direction of the single fiber and the direction parallel to the page, and the distance between the points where the single fiber comes into contact with the copy paper is measured. For example, when a helical pitch is 3.0 cm, contact with the copy paper is performed at three contact points A, B, and C as illustrated in Fig. 2. Therefore, in this case, the distance A-B and the distance B-C are measured, and the average thereof (3.0 cm) is defined as the helical pitch of the fiber axis of the single fiber.

Each individual value is read at the first decimal place, that is, at the digit of 1 mm, and when the digits after the second decimal place appear when the average is calculated, the individual value is held up to the second decimal place. For example, the average of 2.2 cm, 2.3 cm, and 2.2 cm is 2.23333 ••• cm, but the average is rounded off to the third decimal place, and then determined to be 2.23 cm. The helical pitch of the fiber axis of a single fiber is evaluated once for the single fiber to be evaluated.

<Average of helical pitch of fiber axis of carbon fibers>

From the carbon fiber bundle used for the unidirectional composite, 50 single fibers are randomly collected. When it is difficult to obtain carbon fiber bundles that is after having already been pultruded but before being subjected to the production of a unidirectional composite, a rectangle 13 cm long in the fiber orientation direction is cut from an arbitrary position of a unidirectional composite. When the width in the direction orthogonal to the fiber direction is 5 cm or more, the unidirectional composite is cut into a rectangle having a length of 13 cm and a width of 5 cm. The unidirectional composite cut in the rectangle is placed in an electric furnace filled with a nitrogen atmosphere and set at a temperature of 450°C, and the matrix resin is thereby burned off. Then, 50 single fibers are randomly collected from an aggregate of the remaining carbon fiber bundles. For the obtained single fibers, the helical pitch of the fiber axis is evaluated by the above-described method, and the average of the helical pitch of a fiber axis of the carbon fiber bundle is calculated by averaging the evaluation values of the helical pitch. The average of the helical pitch is rounded off to the second decimal place.

<Helical direction of fiber axis of single fiber>

In the method for measuring the helical pitch, the helical direction of the fiber axis of the single fiber is identified by visually observing the single fiber not in the normal direction but in the fiber axis direction. The right-handed is a direction that advances toward the back of the dial of the clock when rotated in the clockwise direction, and is also called a Z-twisted. Left-handed is the opposite, and is also called S-twisted.

<Determination that carbon fibers having different helical directions of fiber axis are contained in unidirectional composite>

First, a rectangular parallelepiped having a length of 13 cm in the fiber orientation direction is cut from an arbitrary position of a unidirectional composite. The unidirectional composite cut in the rectangular parallelepiped is placed in an electric furnace filled with a nitrogen atmosphere and set at a temperature of 450°C, and the matrix resin is thereby burned off. Then, 50 single fibers are randomly collected from an aggregate of the remaining carbon fiber bundles. Next, the helical direction of the fiber axis is evaluated by the above-described method. When it has been confirmed that there are three or more single fibers having a fiber axis having a right-handed helix and three or more single fibers having a fiber axis having a left-handed helix, the composite is determined to be a unidirectional composite including carbon fibers composed of single fibers having a fiber axis having a right-handed helix and carbon fibers composed of single fibers having a fiber axis having a left-handed helix.

<Existence ratio $f_A$ of carbon fiber bundles composed of single fibers having a fiber axis whose helical direction is right-handed>

First, a rectangular parallelepiped having a length of 13 cm in the fiber orientation direction is cut from an arbitrary position of a unidirectional composite. The unidirectional composite cut in the rectangular parallelepiped is placed in an electric furnace filled with a nitrogen atmosphere and set at a temperature of 450°C, and the matrix resin is thereby burned off. Then, an aggregate of the remaining carbon fiber bundles is visually examined and individual carbon fiber bundles are thereby distinguished. Next, three single fibers are collected from each carbon fiber bundle, and the helical direction of the fiber axis is evaluated by the method described above. For a certain carbon fiber bundle, from the evaluation results of the helical directions of the fiber axis of the three single fibers collected from the carbon fiber bundle, the helical direction of the entire bundle of the carbon fiber bundle is determined by majority decision.

For example, when the evaluation results of the helical direction of the fiber axis of three single fibers collected from a certain carbon fiber bundle are right-handed, right-handed, and left-handed, it is determined that the carbon fiber bundle is composed of single fibers having a fiber axis whose helical direction is right-handed (namely, a carbon fiber bundle composed of single fibers having a fiber axis whose helical direction is right-handed).

Here, where the number of carbon fiber bundles composed of single fibers whose fiber axis has a right-handed helix is denoted by $N_A$ (bundles), the number of carbon fiber bundles composed of single fibers whose fiber axis has a left-handed helix is denoted by $N_B$ (bundles), the ratio $N_A/(N_A + N_B)$ is calculated, and the ratio $N_A/(N_A + N_B)$ is defined as an existence ratio $f_A$ of carbon fiber bundles each composed of single fibers whose fiber axis has a right-handed helix. The $f_A$ of two pieces after division when a unidirectional composite is equally divided into two pieces in the width direction, the $f_A$ of four pieces after division when a unidirectional composite is equally divided into four pieces in the width direction, and the $f_A$ of $2^n$ pieces after division when a unidirectional composite is equally divided into $2^n$ pieces (n is a natural number) in the width direction until the width of the unidirectional composite after the division is 10 mm or more and 20 mm or less can also be determined by the same method as described above.

In the case where a carbon fiber bundle was also cut when a unidirectional composite was divided, the weight of the cut carbon fiber bundle is measured. When the measured weight is 70% or more of the weight of an uncut carbon fiber bundle, the cut carbon fiber bundle is counted as 1 carbon fiber bundle, when 30% or more and less than 70% of the weight of the uncut carbon fiber bundle, the cut carbon fiber bundle is counted as 0.5 carbon fiber bundles, and when less than 30% of the weight of the uncut carbon fiber bundle, the cut carbon fiber bundle is counted as 0 carbon fiber bundles.

<Determination that carbon fiber bundles differing in the helix direction of fiber axis are alternately arranged in the width direction of unidirectional composite>

First, a rectangular parallelepiped having a length of 13 cm in the fiber orientation direction is cut from an arbitrary position of a unidirectional composite. The unidirectional composite cut in the rectangular parallelepiped is placed in an electric furnace filled with a nitrogen atmosphere and set at a temperature of 450°C, and the matrix resin is thereby burned off. Then, an aggregate of the remaining carbon fiber bundles is visually examined and individual carbon fiber bundles are thereby distinguished. Next, three single fibers are collected from each carbon fiber bundle, and the helical direction of the fiber axis is evaluated by the method described above. For a certain carbon fiber bundle, from the evaluation results of the helical directions of the fiber axis of the three single fibers collected from the carbon fiber bundle, the helical direction of the entire bundle of the carbon fiber bundle is determined by majority decision. Subsequently, by confirming the position of the right-handed carbon fiber bundle and the position of the left-handed carbon fiber bundle, it is determined whether or not the carbon fiber bundles differing in the helix direction of the fiber axis are alternately arranged in the width direction of the unidirectional composite.

<Volume content of carbon fibers in unidirectional composite>

First, a rectangle having a length of 13 cm in the fiber orientation direction is cut from an arbitrary position of a unidirectional composite. When the width in the direction orthogonal to the fiber direction is 5 cm or more, the unidirectional composite is cut into a rectangle having a length of 13 cm and a width of 5 cm. The mass of the unidirectional composite cut in the rectangle is measured, then this composite is placed in an electric furnace filled with a nitrogen atmosphere and set at a temperature of 450°C, and the matrix resin is thereby burned off. The mass of the resulting carbon fibers is measured. Thus, the mass content $W_f$ of the carbon fibers in the unidirectional composite is determined.

Next, the density $\rho_c$ of the unidirectional composite is determined by the method of determining the density of plastics specified in JIS K 7112:1999, and then the density $\rho_f$ of the carbon fibers obtained by burning off the matrix resin is determined in accordance with the method of determining the density of carbon fibers specified in JIS R 7603:1999.

Finally, the volume content $V_f$ of the carbon fibers is calculated in accordance with the following formula.

$$V_f = W_f \times (\rho_c \div \rho_f)$$

<Average of single-fiber diameter of carbon fibers>

Evaluation is performed by observing carbon fiber single fibers with a scanning electron microscope (SEM). The number of the single fibers to be evaluated is set to 50, and the average of the single-fiber diameters thereof is taken as the average of a single-fiber diameter. In Examples and Comparative Examples of the present invention, observation was performed using an SEM "S-4800" manufactured by Hitachi High-Technologies Corporation.

<Average of single fiber to single fiber distance of carbon fibers contained in unidirectional composite>

A section perpendicular to the fiber direction of a unidirectional composite is illustrated in Fig. 3. As illustrated in Fig. 3, a calculated value of the single fiber to single fiber distance in the case of assuming that carbon fiber single fibers 4 are dispersed in the unidirectional composite while keeping an equal distance therebetween was determined by the following procedure as the average R of the single fiber to single fiber distance of the carbon fibers contained in the unidirectional composite.

When the carbon fiber single fibers 4 are dispersed while keeping an equal distance therebetween, as shown in the right of Fig. 3, the unidirectional composite is represented by a structure composed of repeating units each being an equilateral triangle of side length L formed by connecting the centers of the single fibers 4 of carbon fiber. At this time, the average R of the single fiber to single fiber distance of the carbon fibers can be expressed as R = L - 2r using the center to center distance L between single fibers of carbon fibers and the radius r of the single fibers of carbon fiber.

The ratio of the area ($\pi \times r^2 \div 2$) of a single fiber of the carbon fibers to the area ($A/3 \div 4 \times L^2$) of an equilateral triangle of side length L as a repeating unit is equal to the volume content $V_f$ of the carbon fibers, and can be expressed by the formula: ($n \times r^2 \div 2$) $\div$ ($\sqrt{3} \div 4 \times L^2$) = $V_f \div 100$. This is transformed to L = r $\times$ {$200 \times \pi \div (\sqrt{3} \times V_f)$}$^{0.5}$.

Accordingly, the relationship of R = r $\times$ [{$200 \times \pi \div (\sqrt{3} \times V_f)$}$^{0.5}$ - 2] is obtained. Then, the average R of the single fiber to single fiber distance of the carbon fibers contained in the unidirectional composite was determined through calculation using the value of the radius r of carbon fiber single fibers obtained by dividing the average of the single-fiber diameter of the carbon fibers obtained by the above-described method by 2 and the volume content $V_f$ of the carbon fibers obtained by the above-described method.

<Number of single fibers contained in carbon fiber bundle>

First, a rectangular parallelepiped having a length of 13 cm in the fiber orientation direction is cut from an arbitrary position of a unidirectional composite. The unidirectional composite cut in the rectangular parallelepiped is placed in an electric furnace filled with a nitrogen atmosphere and set at a temperature of 450°C, and the matrix resin is thereby burned off. Then, an aggregate of the remaining carbon fiber bundles is visually examined, and individual carbon fiber bundles are thereby distinguished, and the carbon fiber bundles are evaluated through observation by SEM. The number of the carbon fiber bundles to be evaluated is three, and the average thereof is defined as the number of the single fibers contained in a carbon fiber bundle. The number of single fibers is determined in units of 1,000 single fibers. In Examples and Comparative Examples of the present invention, observation was performed using a scanning electron microscope (SEM) "S-4800" manufactured by Hitachi High-Technologies Corporation.

<Sectional area of carbon fiber bundle contained in unidirectional composite>

Using the average of the single-fiber diameter of the carbon fibers obtained by the above-described method, the sectional area of a carbon fiber single fiber under the assumption that the single fiber has a perfect circle section is determined. The sectional area of the carbon fiber bundle contained in the unidirectional composite is determined by multiplying the sectional area of the obtained single fiber by the number of the single fibers contained in the carbon fiber bundle obtained by the above-described method.

<Evaluation on substantial absence in unidirectional composite of resin-rich portion having area of 3% or more of sectional area X of carbon fiber bundle>

First, a unidirectional composite is cut perpendicularly to the fiber direction to afford a section having a width of 20 mm and a thickness of 1 mm, and then the section is observed with a laser microscope. Subsequently, an area corresponding to 3% of the sectional area of the carbon fiber bundle was calculated using the sectional area of the carbon fiber bundle obtained by the above-described method, and then whether or not a resin-rich portion having that area or more was present was evaluated.

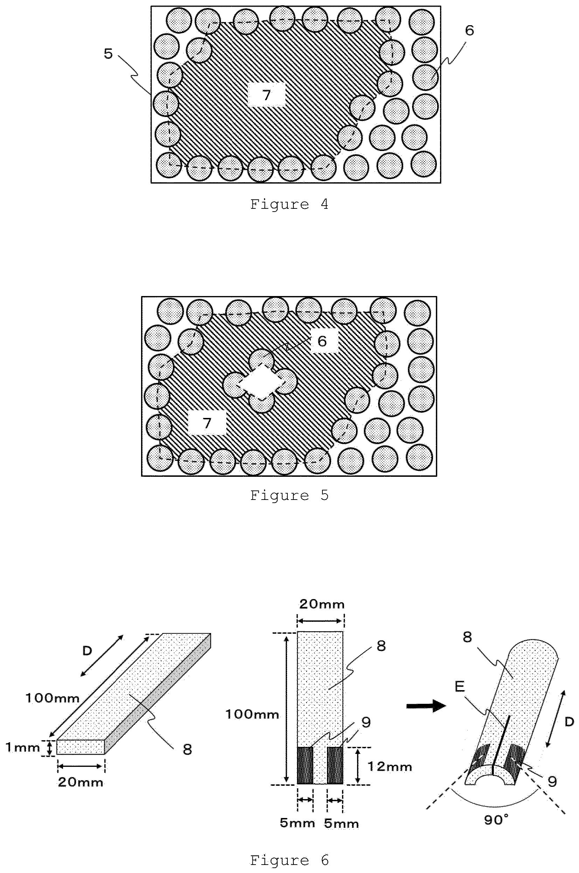

As illustrated in Fig. 4, the area of the resin-rich portion 7 was obtained by confirming, with a laser microscope, the presence or absence of the resin-rich portion 7 composed of substantially only a resin, and then removing, from an area obtained by connecting the center points of the carbon fiber single fibers 6 surrounding the resin-rich portion 7, the area of the carbon fiber single fibers 6 contained in that area. A portion with a distance equal to or larger than the average of the single-fiber diameter of the carbon fibers was regarded as a portion where the resin-rich portion continued, whereas a portion with a distance less than the average of the single-fiber diameters of the carbon fibers was regarded as a portion where the resin-rich portion did not continue, and thus the carbon fiber single fibers 6 surrounding the area of the resin-rich portion 7 were determined.

In addition, the single fibers 6 of carbon fibers surrounding the resin-rich portion 7 were determined according to the above criteria, and then when it was found that the carbon fiber single fibers 6 were contained in the resin-rich portion 7 as illustrated in Fig. 5, the area of the resin-rich portion 7 was calculated by subtracting the area surrounded by the carbon fiber single fibers 6 located inside and the area of the carbon fiber single fibers 6 located inside.

The above-described evaluation was performed for three sections, and when there was no resin-rich portion having an area of 3% or more of the sectional area X of the carbon fiber bundle in all of the observations, it was determined that there was substantially no resin-rich portion having an area of 3% or more of the sectional area X of the raw fiber bundle. In Examples and Comparative Examples of the present invention, a laser microscope "VHX-7000" manufactured by KEYENCE CORPORATION was used.

<Tensile modulus of elasticity of unidirectional composite>

The tensile modulus of elasticity of a unidirectional composite is determined in accordance with JIS K 7164:2005.

Ten test pieces cut from the unidirectional composite are measured, and the average of the measurements is taken as the tensile modulus of elasticity. The strain range in calculating the tensile modulus of elasticity is set to 0.1 to 0.6%.

<Crack resistance along fiber axis of carbon fibers of unidirectional composite>

First, as illustrated at the left in Fig. 6, a unidirectional composite is cut into a size of 100 mm in the fiber axis direction D, 20 mm in the direction perpendicular to the fiber axis, and 1 mm in the thickness direction to afford a sample 8 for evaluation. Next, as illustrated at the center in Fig. 6, two pairs of pincers each having a width of 12 mm are held in both hands, and two pincers-gripping portions 9 (width: 12 mm, length: 5 mm) of the sample 8 for evaluation are gripped with the pairs of pincers. Subsequently, as illustrated at the right in Fig. 6, the sample 8 for evaluation is bent over 1 second in directions orthogonal to the fiber axis direction D such that the gripping portions form together an angle of 90 degrees therebetween, thereby forming a crack E along the fiber axis direction D of the carbon fibers, and then the angle is returned to 0 degrees. Finally, using a tensile tester, the pincers-gripping portions 9 are gripped with chucks and pulled at a crosshead speed of 2 mm/min in a direction orthogonal to the fiber axis direction D, and crack resistance is evaluated according to the following criteria. In Examples and Comparative Examples of the present invention, a tensile tester "5565 type universal testing machine" manufactured by INSTRON was used.
S: To tear the sample in the fiber axis direction D, it is necessary to apply a force of 5 kgf or more.
A: To tear the sample in the fiber axis direction D, it is necessary to apply a force of 2 kgf or more and less than 5 kgf.
B: The sample breaks in the fiber axis direction D at the time of forming the crack, or the sample breaks in the fiber axis direction D with a force of less than 2 kgf.
Examples 1 to 11 and Comparative Examples 1 to 2 described below were performed using the conditions shown in Tables 1 to 2 in the implementation method described in the oxidized fiber production examples 1 to 3.

[Oxidized fiber production example 1]

A monomer composition composed of acrylonitrile and itaconic acid was polymerized by the solution polymerization method using dimethyl sulfoxide as a solvent, affording a spinning dope solution containing a polyacrylonitrile copolymer. A coagulated yarn was produced through a dry-jet wet spinning process in which the resulting spinning dope solution was first filtered, discharged into air through a spinneret, and introduced into a coagulation bath containing an aqueous solution of dimethyl sulfoxide. Then, the coagulated yarn was rinsed, stretched in a hot water bath at 90°C to an underwater stretching ratio of 3, treated with a silicone oil agent, dried using a roller heated at a temperature of 160°C, and subjected to pressurized steam stretching to a stretching ratio of 4, affording carbon fiber precursor fiber bundles having a single-fiber fineness of 1.1 dtex. Subsequently, eight bundles of the resulting carbon fiber precursor fiber bundles were combined to form a bundle containing 24,000 single fibers and heat-treated at a stretching ratio of 1 in an air atmosphere in an oven at 230°C to 270°C, affording an oxidized fiber bundle.

[Oxidized fiber production example 2]

An oxidized fiber bundle was obtained in the same manner as in oxidized fiber production example 1 except that the single-fiber fineness of the carbon fiber precursor fiber bundles was set to 0.8 dtex, and the number of single fibers was set to 12,000 by combining four bundles of the carbon fiber precursor fiber bundles.

[Oxidized fiber production example 3]

An oxidized fiber bundle was obtained in the same manner as in oxidized fiber production example 1 except that the single-fiber fineness of the carbon fiber precursor fiber bundles was set to 0.8 dtex.

[Pultruded Article Production Example]

A pultruded article was obtained by a composition obtained by blending an epoxy resin with a curing agent and a curing accelerator was used as an uncured epoxy resin composition first, attaching the epoxy resin composition to carbon fiber bundles aligned in one direction by passing the carbon fiber bundles through a resin impregnation bath, scraping off excess resin, then curing the carbon fiber bundles by passing the bundles through a die having a hole in a rectangular shaped of 20 mm wide and 1 mm thick and being heated to 180°C at the central portion in the pultruding direction, and continuously pultruding the carbon fiber bundles with a pultrusion device, and cutting the pultrudate into a length of 8 m.

[Unidirectional prepreg molded article production example]

First, a resin film was prepared by applying an uncured epoxy resin composition prepared by bending an epoxy resin with a curing agent and a curing accelerator onto a release paper using a reverse roll coater. Next, carbon fiber bundles aligned in one direction were sandwiched by the resin film from both upper and lower sides, and heated and pressurized to impregnate the carbon fiber bundles with resin, affording a unidirectional prepreg.

This unidirectional prepreg was cut with a cutter into a square shape of 13 cm in the fiber axis direction and 13 cm in the direction orthogonal to the fiber axis, sandwiched between a SUS tool plate and an aluminum pressure plate having a square shape 13 cm on each side, bagged using a bag film and a sealant, and then heated to 180°C in an autoclave and cured, affording a unidirectional prepreg molded article having a width of 13 cm, a length of 13 cm, and a thickness of 1 mm.

[Example 1]

The oxidized fiber bundle obtained in oxidized fiber production example 1 was subjected to a twisting treatment, and a twisted oxidized fiber bundle with a twist of 25 turns/m was thereby prepared. The twisted oxidized fiber bundle was subjected to a preliminarily carbonization treatment at a stretching ratio of 0.97 in a nitrogen atmosphere at a temperature of 300 to 800°C, affording a preliminarily carbonized fiber bundle. Subsequently, the preliminarily carbonized fiber bundle was subjected to a carbonization treatment with an appropriate adjustment of stretching ratio in a nitrogen atmosphere at a temperature of 1,000 to 1,800°C, affording a carbon fiber bundle. The evaluation results are summarized in Table 1.

The carbon fiber bundle was untwisted to be free from residual twists, and then a pultruded article was obtained therefrom in accordance with the pultruded article production example. The evaluation results of the volume content of carbon fibers, the tensile modulus of elasticity, the crack resistance along the fiber axis of carbon fibers, and so on obtained by analyzing the pultruded article were as shown in Table 2.

[Example 2]

A carbon fiber bundle and a pultruded article were obtained in the same manner as in Example 1 except that the carbonization treatment was performed in a nitrogen atmosphere at a temperature of 1,000 to 2,100°C. The evaluation results of the carbon fiber and the pultruded article were as shown in Tables 1 and 2.

[Example 3]

A carbon fiber bundle and a pultruded article were obtained in the same manner as in Example 1 except that the carbonization treatment was performed in a nitrogen atmosphere at a temperature of 1,000 to 1,400°C. The evaluation results of the carbon fiber and the pultruded article were as shown in Tables 1 and 2.

[Example 4]

A carbon fiber bundle and a pultruded article were obtained in the same manner as in Example 1 except that the number of twists was set to 45 turns/m and the volume content of carbon fibers was reduced a little. The evaluation results of the carbon fiber and the pultruded article were as shown in Tables 1 and 2.

[Example 5]

A carbon fiber bundle and a pultruded article were obtained in the same manner as in Example 1 except that the volume content of carbon fibers was reduced a little. The evaluation results of the carbon fiber and the pultruded article were as shown in Tables 1 and 2.

[Example 6]

The oxidized fiber bundle obtained in oxidized fiber production example 2 was subjected to a twisting treatment, and a twisted oxidized fiber bundle with a twist of 45 turns/m was thereby prepared. The twisted oxidized fiber bundle was subjected to a preliminarily carbonization treatment at a stretching ratio of 0.97 in a nitrogen atmosphere at a temperature of 300 to 800°C, affording a preliminarily carbonized fiber bundle. Subsequently, the preliminarily carbonized fiber bundle was subjected to a carbonization treatment with an appropriate adjustment of stretching ratio in a nitrogen atmosphere at a temperature of 1,000 to 1,800°C, affording a carbon fiber bundle. The evaluation results are summarized in Table 1.

The carbon fiber bundle was untwisted to be free from residual twists, and then a pultruded article was obtained therefrom in accordance with the pultruded article production example. The evaluation results of the volume content of carbon fibers, the tensile modulus of elasticity, the crack resistance along the fiber axis of carbon fibers, and so on obtained by analyzing the pultruded article were as shown in Table 2.

[Example 7]

The oxidized fiber bundles obtained in oxidized fiber production example 1 were subjected to a twisting treatment to produce a 45 turn/m Z-twisted oxidized fiber bundle and a 45 turn/m S-twisted oxidized fiber bundle. The respective twisted oxidized fiber bundles were subjected to a preliminarily carbonization treatment at a stretching ratio of 0.97 in a nitrogen atmosphere at a temperature of 300 to 800°C, affording Z-twisted and S-twisted preliminarily carbonized fiber bundles, respectively. Subsequently, these preliminarily carbonized fiber bundles were subjected to a carbonization treatment with an appropriate adjustment of stretching ratio in a nitrogen atmosphere at a temperature of 1,000 to 1,800°C, affording Z-twisted and S-twisted carbon fiber bundles.

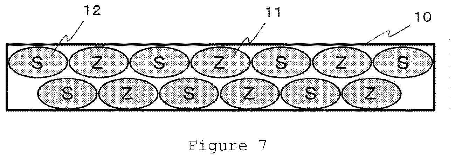

The Z-twisted carbon fiber bundle and the S-twisted carbon fiber bundle were untwisted, respectively, to be free from residual twist, and then pultruded articles were obtained therefrom in accordance with the pultruded article production example. In the pultrusion, right-handed (Z-twisted) carbon fiber bundles 11 and left-handed (S-twisted) carbon fiber bundles 12 were arranged in a pultrusion die 10 so as to be alternately arranged in the width direction at a number ratio of 7 : 6 as illustrated in Fig. 7. The evaluation results of the Vf, the tensile modulus of elasticity, the crack resistance, and so on obtained by analyzing pultruded articles were as shown in Table 2.

The characteristics of the carbon fibers and the modulus of elasticity and crack resistance of the pultruded article were the same as those in Example 4, but the warpage of the pultruded article was very small as compared with Example 4, and the pultruded article had high dimensional stability.

[Example 8]

The oxidized fiber bundle obtained in oxidized fiber production example 3 was subjected to a twisting treatment, and a twisted oxidized fiber bundle with a Z-twist of 15 turns/m was thereby prepared. The twisted oxidized fiber bundle was subjected to a preliminarily carbonization treatment at a stretching ratio of 0.97 in a nitrogen atmosphere at a temperature of 300 to 800°C, affording a preliminarily carbonized fiber bundle. Subsequently, the preliminarily carbonized fiber bundle was subjected to a carbonization treatment with an appropriate adjustment of stretching ratio in a nitrogen atmosphere at a temperature of 1,000 to 1,800°C, affording a carbon fiber bundle. The evaluation results are summarized in Table 1.

The carbon fiber bundle was untwisted to be free from residual twists, and then a pultruded article was obtained therefrom in accordance with the pultruded article production example. The evaluation results of the volume content of carbon fibers, the tensile modulus of elasticity, the crack resistance along the fiber axis of carbon fibers, and so on obtained by analyzing the pultruded article were as shown in Table 2.

[Example 9]

A carbon fiber bundle and a pultruded article were obtained in the same manner as in Example 1 except that the carbon fiber bundle was untwisted to reduce the residual twist to 5 turns/m, and then a pultruded article was obtained in accordance with the pultruded article production example. The evaluation results of the carbon fiber and the pultruded article were as shown in Tables 1 and 2.

[Example 10]

A carbon fiber bundle and a pultruded article were obtained in the same manner as in Example 1 except that the carbon fiber bundle was untwisted to reduce the residual twist to 15 turns/m, and then a pultruded article was obtained in accordance with the pultruded article production example. The evaluation results of the carbon fibers and the pultruded article are as shown in Tables 1 and 2, and there was a resin-rich portion having an area of 3% or more of the sectional area X of the carbon fiber bundle in the section of the pultruded article, and the crack resistance itself was high, but it was inferior to that of Example 1.

[Example 11]

The oxidized fiber bundle obtained in oxidized fiber production example 2 was subjected to a twisting treatment, and a twisted oxidized fiber bundle with a twist of 25 turns/m was thereby prepared. The twisted oxidized fiber bundle was subjected to a preliminarily carbonization treatment at a stretching ratio of 0.97 in a nitrogen atmosphere at a temperature of 300 to 800°C, affording a preliminarily carbonized fiber bundle. Subsequently, the preliminarily carbonized fiber bundle was subjected to a carbonization treatment with an appropriate adjustment of stretching ratio in a nitrogen atmosphere at a temperature of 1,000 to 1,800°C, affording a carbon fiber bundle. The evaluation results are summarized in Table 1.

The carbon fiber bundle was untwisted to be free from residual twists, and then a unidirectional prepreg molded article was obtained therefrom in accordance with the unidirectional prepreg molded article production example. The evaluation results of the volume content of carbon fibers, the tensile modulus of elasticity, the crack resistance along the fiber axis of carbon fibers, and so on obtained by analyzing the unidirectional prepreg molded article were as shown in Table 2. [Comparative Example 1]

A carbon fiber bundle shown in Table 1 was obtained in the same manner as in Example 1 except that the number of twists was set to 0 turns/m. The stretching ratio during the carbonization treatment was increased in order to increase the tensile modulus of elasticity of the carbon fiber bundle, and as a result, a very large amount of fuzz was generated. An attempt was made to obtain a pultruded article in accordance with the pultruded article production example, but a trouble in which fuzz accumulated in the spinneret occurred, and a pultruded article could not be obtained.

[Comparative Example 2]

A carbon fiber bundle shown in Table 1 was obtained in the same manner as in Comparative Example 1 except that the stretching ratio during the carbonization treatment was reduced a little. Although the tensile modulus of elasticity of the carbon fiber bundle was somewhat low, the carbon fiber bundle obtained had less fuzz. Subsequently, a pultruded article was obtained in accordance with the pultruded article production example. The evaluation results of the carbon fiber and the pultruded article were as shown in Tables 1 and 2.

[Table 1]

| | | Carbon fiber | | | | | | Right-handed carbon fiber | Left-handed carbon fiber |
|---|---|---|---|---|---|---|---|---|---|
| | | Tensile modulus of elasticity | Average of single-fiber diameter of carbon fibers | Number of single fibers contained in carbon fiber bundle | Sectional area X of carbon fiber bundle | Undulation width of single fiber | Average of helical pitch | Number of twists A | Number of twists B |
| | | GPa | qm | fibers | mm2 | qm | cm | turns/m | turns/m |
| | Example 1 | 390 | 6.9 | 24000 | 0.90 | 4.5 | 4.01 | 25 | - |
| | Example 2 | 450 | 6.9 | 24000 | 0.90 | 4.5 | 4.04 | 25 | - |
| | Example 3 | 350 | 6.9 | 24000 | 0.90 | 4.5 | 3.98 | 25 | - |
| | Example 4 | 420 | 6.9 | 24000 | 0.90 | 7.8 | 2.24 | 45 | - |
| | Example 5 | 390 | 6.9 | 24000 | 0.90 | 4.5 | 4.02 | 25 | - |
| | Example 6 | 400 | 5.6 | 12000 | 0.30 | 3.3 | 2.20 | 45 | - |
| | Example 7 | 420 | 6.9 | 24000 | 0.90 | 7.8 | 2.24 | 45 | 45 |
| | Example 8 | 392 | 5.6 | 24000 | 0.59 | 2.1 | 6.65 | 15 | - |
| | Example 9 | 390 | 6.9 | 24000 | 0.90 | 4.5 | 3.99 | 25 | - |
| | Example 10 | 390 | 6.9 | 24000 | 0.90 | 4.5 | 4.01 | 25 | - |
| | Example 11 | 395 | 5.6 | 12000 | 0.30 | 2.1 | 3.99 | 25 | - |
| | Comparative Example 1 | 330 | 6.9 | 24000 | 0.90 | 0.6 | - | 0 | - |
| | Comparative Example 2 | 290 | 6.9 | 24000 | 0.90 | 0.6 | - | 0 | - |

[Table 2]

| | | Unidirectional composite | | | | | | |
|---|---|---|---|---|---|---|---|---|
| | $f_A$ | Volume content Vf of carbon fiber | Average R of single fiber to single fiber distance of carbon fibers | D ÷ R | Number of twists of carbon fiber bundle in matrix resin | Presence or absence of a resin-rich portion having an area of 3% or more of X | Tensile modulus of elasticity | Crack resistance |
| | - | % by volume | qm | - | turns/m | - | GPa | - |
| Example 1 | 1.00 | 67.3 | 1.1 | 4.1 | 0 | Absent | 262 | S |
| Example 2 | 1.00 | 67.3 | 1.1 | 4.1 | 0 | Absent | 303 | S |
| Example 3 | 1.00 | 67.3 | 1.1 | 4.1 | 0 | Absent | 236 | S |
| Example 4 | 1.00 | 58.3 | 1.7 | 4.6 | 0 | Absent | 245 | S |
| Example 5 | 1.00 | 58.3 | 1.7 | 2.6 | 0 | Absent | 227 | A |
| Example 6 | 1.00 | 66.5 | 0.9 | 3.5 | 0 | Absent | 266 | A |
| Example 7 | 0.54 | 58.3 | 1.7 | 4.6 | 0 | Absent | 245 | S |
| Example 8 | 1.00 | 65.0 | 1.0 | 2.1 | 0 | Absent | 255 | A |
| Example 9 | 1.00 | 67.3 | 1.1 | 4.1 | 5 | Absent | 262 | S |
| Example 10 | 1.00 | 67.3 | 1.1 | 4.1 | 15 | Present | 262 | A |
| Example 11 | 1.00 | 65.0 | 1.0 | 2.1 | 0 | Absent | 269 | A |
| Comparative Example 1 | 1.00 | - | - | - | - | - | - | - |
| Comparative Example 2 | 1.00 | 67.3 | 1.1 | 0.5 | 0 | Absent | 195 | B |

INDUSTRIAL APPLICABILITY

According to the present invention, it is possible to obtain a unidirectional composite having high resistance to cracks along the fiber axis of carbon fibers by untwisting a twisted yarn having a large number of twists and using the untwisted yarn for the production of the unidirectional composite, and effectively controlling the undulation width of the fiber axis of single fibers of the carbon fibers. In addition, a windmill blade in which the unidirectional composite is used for a spar cap makes it easy to avoid damage in post-processing necessary for coping with the increase in size.

DESCRIPTION OF REFERENCE SIGNS

1: Single fiber of carbon fiber
2: Copy paper
A: Contact point A
B: Contact point B
C: Contact point C
3: Section of unidirectional composite (in the case of uniform dispersion)
4: Single fiber of carbon fiber
L: Center to center distance between carbon fiber single fibers (in the case of uniform dispersion)
R: Average of single fiber to single fiber distance of carbon fibers contained in unidirectional composite
r: Radius of single fiber of carbon fiber
5: Section of unidirectional composite
6: Single fiber of carbon fiber

7: Resin-rich portion
D: Fiber axis direction
E: Crack
8: Sample for evaluation
9: Pincers-gripping portion
10: Die for pultrusion (rectangular hole shape)
11: Right-handed (Z-twisted) carbon fiber bundle
12: Left-handed (S-twisted) carbon fiber bundle

**Claims**

1. A unidirectional composite comprising carbon fibers and a matrix resin, wherein a single fiber of the carbon fibers has an undulation width of a fiber axis of 1.5 $\mu$m or more when the single fiber is observed from a side face in a range having a straight distance of 1 mm.

2. The unidirectional composite according to claim 1, wherein an average of a helical pitch of a fiber axis of the carbon fibers is 5.50 cm or less.

3. The unidirectional composite according to claim 1 or 2, a formula (1) is satisfied where an average of a single fiber to single fiber distance of the carbon fibers contained in the unidirectional composite is denoted by R (um), and an undulation width of the fiber axis of the carbon fibers is denoted by D ($\mu$m)

$$2.0 \leq D \div R \leq 35.0 \cdots \text{Formula (1)}.$$

4. The unidirectional composite according to claim 1 or 2, wherein a volume content of the carbon fibers is 60% by volume or more.

5. The unidirectional composite according to claim 1 or 2, wherein a carbon fiber bundle is contained in the matrix resin in a state where the carbon fiber bundle has a twist of 10 turns/m or less.

6. The unidirectional composite according to claim 1 or 2, wherein in a section perpendicular to a fiber direction of the unidirectional composite, where a sectional area of a carbon fiber bundle contained in the unidirectional composite is denoted by X (mm$^2$), there is substantially no resin-rich portion having an area of 3% or more of X.

7. The unidirectional composite according to claim 1 or 2, containing, as the carbon fibers, both carbon fibers being single fibers whose fiber axis has a right-handed helix and carbon fibers being single fibers whose fiber axis has a left-handed helix.

8. The unidirectional composite according to claim 7, wherein where the number of carbon fiber bundles composed of carbon fibers being single fibers whose fiber axis has a right-handed helix is denoted by $N_A$ (bundles), and the number of carbon fiber bundles composed of carbon fibers being single fibers whose fiber axis has a left-handed helix is denoted by $N_B$ (bundles), a ratio $N_A/(N_A + N_B)$ is 0.4 to 0.6.

9. The unidirectional composite according to claim 7, wherein carbon fiber bundles composed of carbon fibers being single fibers whose fiber axis has a right-handed helix and carbon fiber bundles composed of carbon fibers being single fibers whose fiber axis has a left-handed helix are alternately arranged in a width direction of the unidirectional composite.

10. The unidirectional composite according to claim 1 or 2, having a tensile modulus of elasticity of 150 GPa or more.

11. The unidirectional composite according to claim 1 or 2, being a pultruded article.

12. The unidirectional composite according to claim 1 or 2, wherein an average of a single-fiber diameter of the carbon fibers is 6.0 $\mu$m or less, and the unidirectional composite is a unidirectional prepreg molded article.

13. A spar cap comprising the unidirectional composite according to claim 1 or 2.

**14.** A windmill blade comprising the spar cap according to claim 13.

Figure 1

Figure 2

Figure 3

Figure 4

Figure 5

Figure 6

Figure 7

## INTERNATIONAL SEARCH REPORT

| International application No. |
| --- |
| **PCT/JP2023/003947** |

### A. CLASSIFICATION OF SUBJECT MATTER

*F03D 1/06*(2006.01)i; *B29C 70/20*(2006.01)i; *B29C 70/52*(2006.01)i; *D01F 9/22*(2006.01)i
FI: B29C70/52; F03D1/06 Z; D01F9/22; B29C70/20

According to International Patent Classification (IPC) or to both national classification and IPC

### B. FIELDS SEARCHED

Minimum documentation searched (classification system followed by classification symbols)

F03D1/06; B29C70/20; B29C70/52; D01F9/22

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2021-31617 A (DAINIPPON INK & CHEMICALS) 01 March 2021 (2021-03-01) <br> paragraphs [0107], [0112] | 1-14 |
| Y | JP 2014-141761 A (TORAY IND INC) 07 August 2014 (2014-08-07) <br> claims | 1-14 |
| Y | WO 2019/203088 A1 (TORAY IND INC) 24 October 2019 (2019-10-24) <br> claims | 1-14 |

☐ Further documents are listed in the continuation of Box C.  ☑ See patent family annex.

| | |
| --- | --- |
| *    Special categories of cited documents: <br> "A"  document defining the general state of the art which is not considered to be of particular relevance <br> "E"  earlier application or patent but published on or after the international filing date <br> "L"  document which may throw doubts on priority claim(s) or which is cited to establish the publication date of another citation or other special reason (as specified) <br> "O"  document referring to an oral disclosure, use, exhibition or other means <br> "P"  document published prior to the international filing date but later than the priority date claimed | "T"  later document published after the international filing date or priority date and not in conflict with the application but cited to understand the principle or theory underlying the invention <br> "X"  document of particular relevance; the claimed invention cannot be considered novel or cannot be considered to involve an inventive step when the document is taken alone <br> "Y"  document of particular relevance; the claimed invention cannot be considered to involve an inventive step when the document is combined with one or more other such documents, such combination being obvious to a person skilled in the art <br> "&"  document member of the same patent family |

| Date of the actual completion of the international search | Date of mailing of the international search report |
| --- | --- |
| **28 February 2023** | **14 March 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2023/003947**

| Patent document cited in search report | | | Publication date (day/month/year) | Patent family member(s) | Publication date (day/month/year) |
|---|---|---|---|---|---|
| JP | 2021-31617 | A | 01 March 2021 | (Family: none) | |
| JP | 2014-141761 | A | 07 August 2014 | (Family: none) | |
| WO | 2019/203088 | A1 | 24 October 2019 | US 2021/0108041 A1 claims<br>EP 3783136 A1<br>CN 111936681 A<br>KR 10-2020-0142505 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018001682 A
- JP 2013083451 A
- US 20190270261 A
- JP 2019203088 A
- JP 2014141761 A
- WO 19203088 A